# EUROPEAN PATENT APPLICATION

(11) **EP 2 835 626 A1**
(43) Date of publication of application: **11.02.2015**
(21) Application number: 14180014.4
(22) Date of filing: 06.08.2014
(51) Int. Cl.: G01N 1/38, G01N 35/04, G01N 35/10, G01N 35/00

(54) **Analysis device, specimen sampling implement, analysis process and analysis program**

(30) Priority: 07.08.2013 JP 2013164250; 01.08.2014 JP 2014157937
(71) Applicant: ARKRAY, Inc., Kyoto-shi, Kyoto 601-8045 (JP)
(72) Inventor: Kasai, Tokuo, Kyoto, 602-0008 (JP)
(74) Representative: Hoffmann Eitle

(57) **Abstract**

An analysis device (1) includes an analysis sample preparation section (113), a specimen sampling implement conveyance member (130), an analysis section (110), and a control section (102c). The analysis sample preparation section (113) uses a specimen and an analysis sample preparation member to prepare an analysis sample of the specimen. A specimen sampling implement (150), which retains the specimen, is mounted to the specimen sampling implement conveyance member (130) from externally thereto, and the specimen sampling implement conveyance member (130) conveys the specimen sampling implement (150). The analysis section (110) analyzes the analysis sample. The control section (102c) controls the specimen sampling implement conveyance member (130) so as to convey the specimen sampling implement (150) to the analysis sample preparation section (113) and directly transfer the specimen from the specimen sampling implement (150) to the analysis sample preparation member at the analysis sample preparation member.

## Description

### TECHNICAL FIELD

The present invention relates to an analysis device, a specimen sampling implement, an analysis process and an analysis program.

### BACKGROUND ART

When only a small amount of blood can be collected from a test subject, the blood is collected with a capillary.

Japanese Utility Model Application Laid-Open (JP-U) No. H6-7042 discloses a process such that a blood specimen sampled by a capillary in this manner can be placed as it is in an automatic analysis device. JP-U No. H6-7042 discloses a technology in which capillaries are accommodated in holders of the same size as sample cups of the automatic analysis device. In this technology, the holders are placed, one-to-one, in sample locations of the automatic analysis device, each holder is fixed in position in the device, and the blood sample is sucked from the capillary in the holder by a nozzle.

Meanwhile, Japanese Patent No. 4,807,587 discloses an adapter that functions as a gripping portion for holding a capillary. The adapter includes a tapered nozzle insertion hole that widens at an opening at the opposite end of the capillary from an end thereof at which a blood collection opening is formed. In this technology, the adapter is connected to a capillary blood collection tube, the distal end of a nozzle of an automatic analysis device is inserted into the nozzle insertion hole, and the blood in the capillary is sucked up by the nozzle.

### SUMMARY OF INVENTION

### TECHNICAL PROBLEM

With these technologies, however, a mechanism for sucking a blood sample from a capillary with a nozzle is complicated, and a procedure for sucking the blood sample from the capillary with the nozzle is also complicated.

An object of the present invention is to provide an analysis device that can simply prepare an analysis sample from a specimen sampling implement that samples a specimen, and to provide the specimen sampling implement, an analysis process and an analysis program.

### SOLUTION TO PROBLEM

According to one aspect of the present invention, an analysis device is provided that includes: an analysis sample preparation section that utilizes a specimen and an analysis sample preparation member to prepare an analysis sample of the specimen; a specimen sampling implement conveyance member at which a specimen sampling implement that retains the specimen is attached from externally thereto, the specimen sampling implement conveyance member conveying the specimen sampling implement; an analysis section that analyzes the analysis sample; and a control section that controls the specimen sampling implement conveyance member so as to: convey the specimen sampling implement to the analysis sample preparation section and directly transfer the specimen from the specimen sampling implement to the analysis sample preparation member at the analysis sample preparation section.

According to another aspect of the present invention, an analysis device is provided that includes: an analysis sample preparation section that utilizes a specimen and an analysis sample preparation member to prepare an analysis sample of the specimen; a specimen sampling implement conveyance member that conveys a specimen sampling implement to the analysis sample preparation section, the specimen sampling implement sampling the specimen, and directly transfers the specimen from the specimen sampling implement to the analysis sample preparation member at the analysis sample preparation section; and an analysis section that analyzes the analysis sample.

According to still another aspect of the present invention, a specimen sampling implement is provided that includes: a specimen sampling portion that utilizes the capillary effect to sample a specimen; and an attachment member that attaches the specimen sampling implement to a specimen sampling implement conveyance member that conveys the specimen sampling implement.

According to still another aspect of the present invention, an analysis process is provided that includes: attaching a specimen sampling implement that retains a specimen to a specimen sampling implement conveyance member from externally thereto, the specimen sampling implement conveyance member conveying the specimen sampling implement; with the specimen sampling implement conveyance member, conveying the specimen to an analysis sample preparation section that utilizes the specimen and an analysis sample preparation member to prepare an analysis sample of the specimen; directly transferring the specimen from the specimen sampling implement to the analysis sample preparation member at the analysis sample preparation section; and analyzing the analysis sample.

According to still another aspect of the present invention, an analysis process is provided that includes: in a state in which a specimen sampling implement that retains a specimen has been attached from externally to a specimen sampling implement conveyance member that conveys the specimen sampling implement, conveying the specimen sampling implement to an analysis sample preparation section that utilizes the specimen and an analysis sample preparation member to prepare an analysis sample of the specimen; causing the specimen sampling implement conveyance member to directly transfer the specimen from the specimen sampling implement to the analysis sample preparation member at the analysis sample preparation section; and analyzing the analysis sample.

According to still another aspect of the present invention, an analysis program is provided that causes a computer to execute a process comprising: in a state in which a specimen sampling implement that retains a specimen has been attached from externally to a specimen sampling implement conveyance member that conveys the specimen sampling implement, conveying the specimen sampling implement to an analysis sample preparation section that utilizes the specimen and an analysis sample preparation member to prepare an analysis sample of the specimen; causing the specimen sampling implement conveyance member to directly transfer the specimen from the specimen sampling implement to the analysis sample preparation member at the analysis sample preparation section; and analyzing the analysis sample.

### ADVANTAGEOUS EFFECTS OF INVENTION

An analysis device that can simply prepare an analysis sample from a specimen sampling implement that samples a specimen, the specimen sampling implement, an analysis process and an analysis program may be provided.

### BRIEF DESCRIPTION OF DRAWINGS

Fig. 1 is a schematic perspective view for describing a blood analysis device according to a first exemplary embodiment.
Fig. 2 is a schematic perspective view for describing a capillary conveyance member of the blood analysis device according to the first exemplary embodiment.
Fig. 3 is a schematic perspective view for describing a capillary component to be favorably used in the blood analysis device according to the first exemplary embodiment.
Fig. 4 is a schematic perspective view for describing the structure of a capillary component attachment portion of the capillary conveyance member of the blood analysis device according to the first exemplary embodiment.
Fig. 5 is a schematic perspective view for describing a structure for attachment of the capillary component to the capillary conveyance member of the blood analysis device according to the first exemplary embodiment.
Fig. 6 is a flowchart for describing a process of performing an analysis using the capillary component in the blood analysis device according to the first exemplary embodiment.
Fig. 7A is a flowchart for describing a process of performing an analysis using a blood collection tube in the blood analysis device according to the first exemplary embodiment.
Fig. 7B is a flowchart for describing the process of performing the analysis using the blood collection tube in the blood analysis device according to the first exemplary embodiment.
Fig. 8 is a schematic perspective view for describing a blood analysis device according to a second exemplary embodiment.
Fig. 9 is a schematic perspective view for describing a blood analysis device according to a third exemplary embodiment.
Fig. 10 is an enlarged schematic perspective view of a portion of Fig. 9.
Fig. 11 is an enlarged schematic perspective view for describing a first variant example of the blood analysis device according to the third exemplary embodiment.
Fig. 12 is an enlarged schematic perspective view for describing a second variant example of the blood analysis device according to the third exemplary embodiment.
Fig. 13 is an enlarged schematic perspective view for describing a third variant example of the blood analysis device according to the third exemplary embodiment.
Fig. 14 is an enlarged schematic perspective view for describing a fourth variant example of the blood analysis device according to the third exemplary embodiment.
Fig. 15 is an enlarged schematic perspective view for describing a fifth variant example of the blood analysis device according to the third exemplary embodiment.
Fig. 16 is a schematic perspective view for describing a blood analysis device according to a fourth exemplary embodiment.
Fig. 17 is a schematic perspective view for describing a sample analysis device according to a fifth exemplary embodiment.
Fig. 18 is a schematic perspective view for describing a sample analysis device according to a sixth exemplary embodiment.

### DESCRIPTION OF EMBODIMENTS

Now, a blood analysis device according to a preferred embodiment of the present invention is described with reference to the attached drawings. This blood analysis device is an example of the analysis device. According to the blood analysis device in the exemplary embodiment described below, measurements may be carried out using specimens of very small quantities: 0.5 µL to 10 µL. That is, the blood analysis device in the following exemplary embodiment is useful for measurements of minute-amount specimens of, for example, 1 µL to 8 µL, and furthermore is useful for measurements of minute-amount specimens of, for example, 2 µL to 5 µL.

### - First Exemplary Embodiment -

In the case of an infant child, amounts of blood that can be collected are extremely small. Accordingly, a blood sample from an infant can be accommodated in a capillary, which is formed in a tube shape, and used for blood testing. The amount of blood accommodated in a capillary is of the order of a few µL (microliters). In the case of an adult, the amount of blood that can be collected is large, and blood samples from adults can be accommodated in blood collection tubes and used for blood testing. The blood analysis device according to the present exemplary embodiment may automatically analyze both blood samples accommodated in capillaries and blood samples accommodated in blood collection tubes.

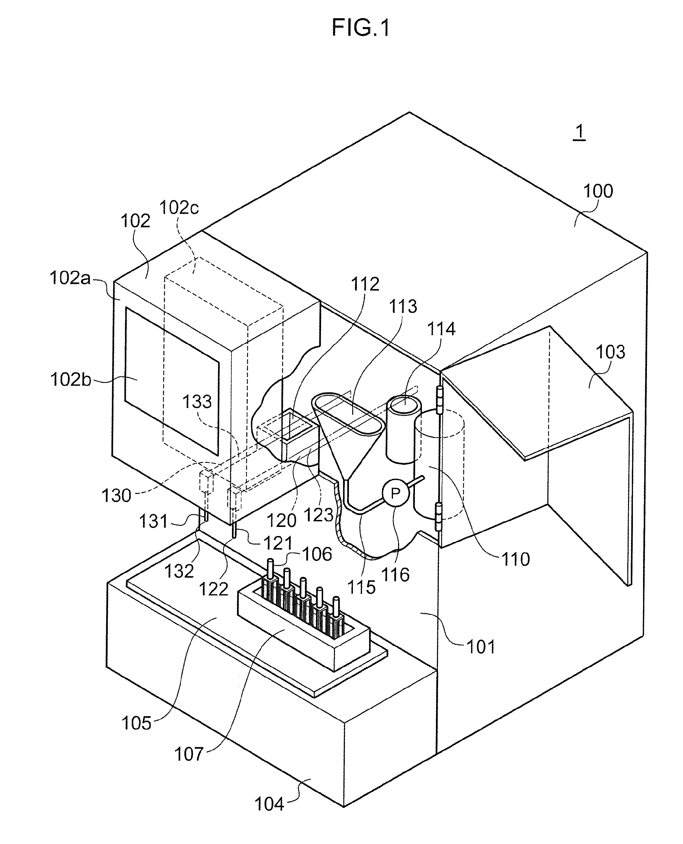

Referring to Fig. 1, a blood analysis device 1 according to the present exemplary embodiment is equipped with a blood analysis device main body 100, a control section 102, a cover 103, and a blood collection tube rack loading portion 104. The control section 102 is mounted at a left-side upper portion of a front face 101 of the blood analysis device main body 100. The cover 103 is mounted at a right-side upper portion of the front face 101 of the blood analysis device main body 100. The blood collection tube rack loading portion 104 is mounted at a lower portion of the front face 101 of the blood analysis device main body 100. The blood collection tube rack loading portion 104 is equipped with a movable platform 105. A blood collection tube rack 107, on which a plural number of blood collection tubes 106 stand upright, is loaded on the movable platform 105. The movable platform 105 is controlled by a controller 102c, which is described below, and is moved to front, rear, left and right.

The control section 102 is equipped with a display and control portion 102b, which is provided at a front face 102a of the control section 102, and a controller 102c, which is provided at the inside of the control section 102. The controller 102c is structured by, for example, a microcomputer. The display and control portion 102b is connected to a CPU of the controller 102c via an internal bus of the controller 102c. The display and control portion 102b displays control states and analysis results, receives control signals, and so forth. The controller 102c is an example of a control section.

Inside the blood analysis device main body 100, an analysis box 110, a disposal box 112, a dilution tank 113 and a washing tank 114 are provided. The dilution tank 113 and the analysis box 110 are connected by piping 115. A pump 116 is provided partway along the piping 115. The analysis box 110 and the pump 116 are controlled by the controller 102c. A blood sample is diluted in the dilution tank 113 with a diluting fluid. The diluted blood sample is fed to the analysis box 110 by the pump 116. The diluting fluid is an example of an analysis sample preparation member, and the diluted blood specimen is an example of an analysis sample. The dilution tank 113 is an example of an analysis sample preparation section, and the analysis box 110 is an example of an analysis section. The analysis box 110 is equipped for high performance liquid chromatography (HPLC).

The blood analysis device 1 is equipped with a nozzle conveyance line 120 and a capillary component conveyance line 130.

The nozzle conveyance line 120 is equipped with a nozzle 121 and a nozzle conveyance portion 123. The nozzle conveyance portion 123 conveys the nozzle 121 between a blood collection position 122, the dilution tank 113 and the washing tank 114.

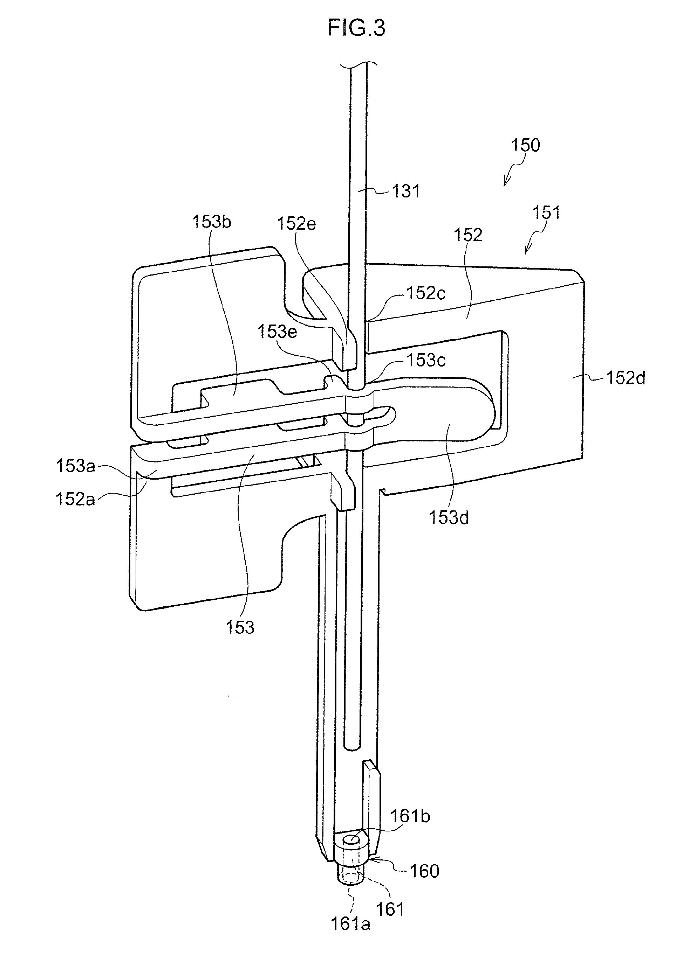

The capillary component conveyance line 130 is equipped with an attachment rod 131 and a capillary component conveyance portion 133. A capillary component 150 (see Fig. 3), which is described below, is attached to the attachment rod 131. The capillary component conveyance portion 133 conveys the capillary attachment part 151 attached to the attachment rod 131 between a capillary component attachment position 132, the dilution tank 113 and the disposal box 112. The capillary component conveyance line 130 is an example of a specimen sampling implement conveyance member, the capillary component 150 is an example of a specimen sampling implement, and the attachment rod 131 is an example of a specimen sampling implement attachment portion.

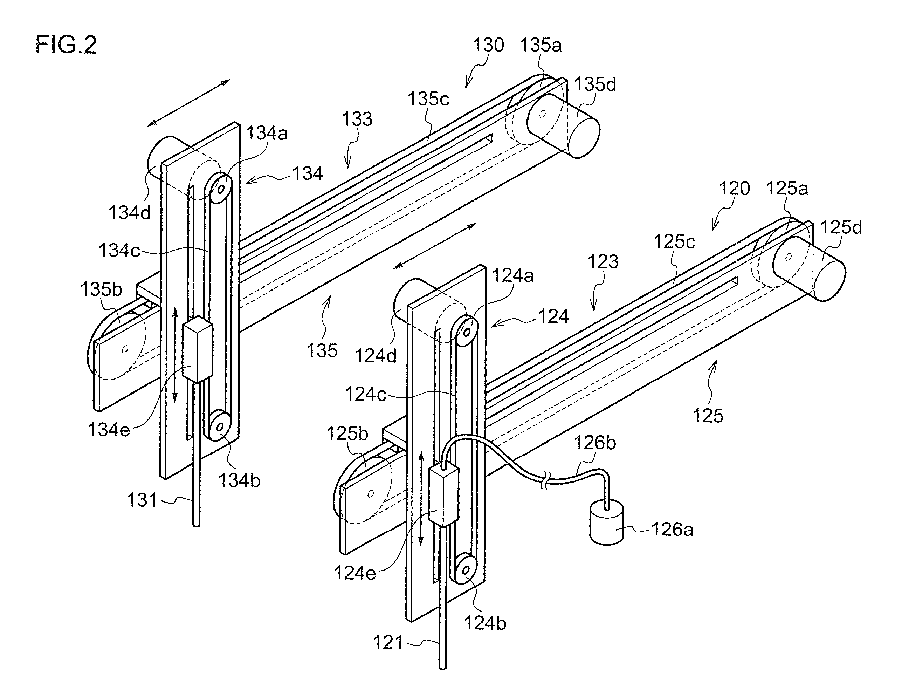

Referring to Fig. 2, the nozzle conveyance portion 123 is equipped with a vertical conveyance portion 124 and a horizontal conveyance portion 125. The vertical conveyance portion 124 is provided with a pulley 124a, a pulley 124b, a belt 124c that is wound between the pulley 124a and pulley 124b, a motor 124d that is directly connected to the pulley 124a, and a nozzle attachment member 124e. The nozzle attachment member 124e is fixed to the belt 124c and the nozzle 121 is mounted vertically at the nozzle attachment member 124e. The horizontal conveyance portion 125 is equipped with a pulley 125a and a pulley 125b, a belt 125c that is wound between the pulleys 125a and 125b, and a motor 125d that is directly connected to the pulley 125a. The vertical conveyance portion 124 is fixed to the belt 125c. The vertical conveyance portion 124 is moved in the horizontal direction by driving of the motor 125d, and thus the nozzle 121 mounted at the vertical conveyance portion 124 is moved in the horizontal direction. The nozzle 121 is moved in the vertical direction by driving of the motor 124d. A pump 126a is attached to the nozzle 121 via a tube 126b. The controller 102c (see Fig. 1) controls the motor 124d and the motor 125d, and controls the nozzle conveyance portion 123 and the nozzle conveyance line 120. The controller 102c also controls the pump 126a.

The capillary component conveyance portion 133 is equipped with a vertical conveyance portion 134 and a horizontal conveyance portion 135. The vertical conveyance portion 134 is provided with a pulley 134a, a pulley 134b, a belt 134c that is wound between the pulleys 134a and 134b, a motor 134d that is directly connected to the pulley 134a, and a rod attachment member 134e. The rod attachment member 134e is fixed to the belt 134c and the attachment rod 131 is mounted vertically at the rod attachment member 134e. The horizontal conveyance portion 135 is equipped with a pulley 135a and a pulley 135b, a belt 135c that is wound between the pulleys 135a and 135b, and a motor 135d that is directly connected to the pulley 135a. The vertical conveyance portion 134 is fixed to the belt 135c. The vertical conveyance portion 134 is moved in the horizontal direction by driving of the motor 135d, and thus the attachment rod 131 mounted at the vertical conveyance portion 134 is moved in the horizontal direction. The attachment rod 131 is moved in the vertical direction by driving of the motor 134d. The controller 102c (see Fig. 1) controls the motor 134d and the motor 135d, and controls the capillary component conveyance portion 133 and the capillary component conveyance line 130.

Referring to Fig. 3, the capillary component 150 is equipped with a blood sampling portion 160 and a capillary attachment part 151. The blood sampling portion 160 is an example of a specimen sampling portion, and the capillary attachment part 151 is an example of an attachment member. The blood sampling portion 160 is provided with a capillary 161. Openings 161a and 161b are formed at the two ends of the capillary 161, opening up the two ends of the capillary 161. When the opening 161 a of the capillary 161 is dipped in a specimen of blood or the like, the specimen of blood or the like is sucked into the capillary 161 by the capillary effect.

The diameter of the capillary 161 is, for example, 1.2 mm and the length is, for example, 5.5 mm. Because the diameter of this capillary 161 is large and the length is short, the suction speed is high, in addition to which the specimen of blood or the like disperses easily in the diluting fluid. It is preferable if the diameter of the capillary 161 is in the range from 0.2 mm to 2.0 mm, and a diameter from 0.8 mm to 2.0 mm is more preferable. It is preferable if the length is in the range from 1 mm to 10 mm, and a length from 1 mm to 7 mm is more preferable. Accordingly, a minute-amount specimen from 1 µL to 8 µL may be sampled by the specimen sampling implement.

The capillary attachment part 151 is equipped with an attachment base 152 and a holding member 153. One end portion 153a of the holding member 153 is attached to one end portion 152a of the attachment base 152. An indentation portion 153c is provided at a side of the holding member 153 at which an other end portion 153d thereof is disposed. A protrusion portion 153b is provided between the one end portion 153a and the indentation portion 153c of the holding member 153. When the protrusion portion 153b is pushed, the holding member 153 moves in a direction away from the attachment base 152, pivoting about the one end portion 153a. In this state, the capillary attachment part 151 is inserted, leading with the side of the attachment base 152 at which an other end portion 152d thereof is disposed, such that the attachment rod 131 is sandwiched between the attachment base 152 and the holding member 153. The attachment rod 131 is stopped by stoppers 152e of the attachment base 152 and stoppers 153e of the holding member 153. When the pushing on the protrusion portion 153b of the holding member 153 is ended, the capillary attachment part 151 is attached to the attachment rod 131 in a state in which the attachment rod 131 is tightly fitted between an indentation portion 152c of the attachment base 152 and the indentation portion 153c of the holding member 153 and the attachment rod 131 is held by the holding member 153 at the side thereof at which the attachment base 152 is disposed. In the present mode, the blood sampling portion 160 and the capillary attachment part 151 are integrated, but a mode in which the blood sampling portion 160 and the capillary attachment part 151 are separate bodies and are assembled for use is also possible.

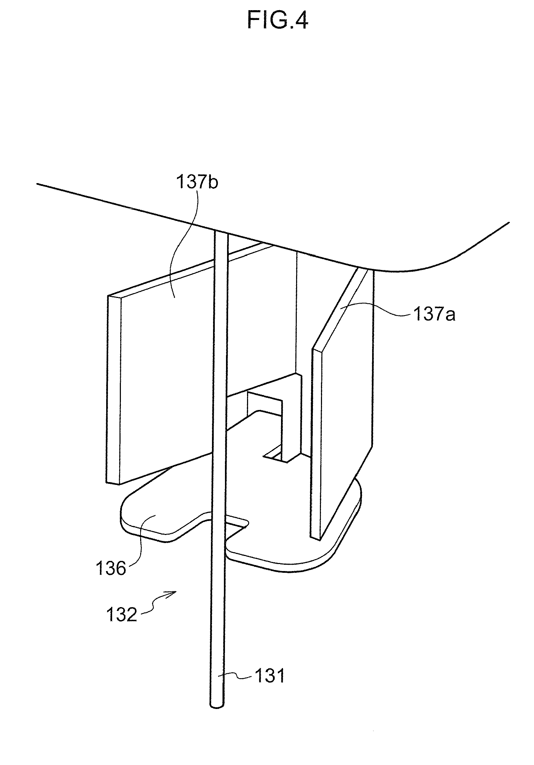

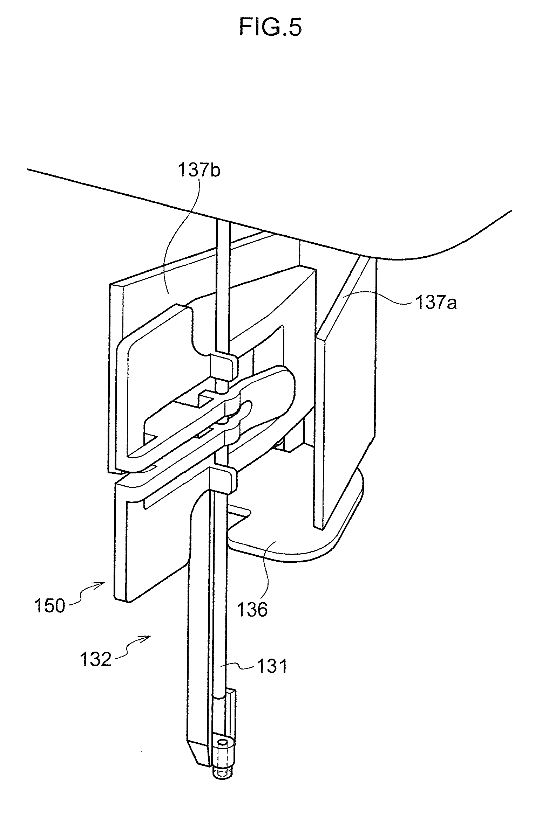

Referring to Fig. 4, an attachment rod-far side stopper member 136 is provided at the capillary component attachment position 132, at a far side of the attachment rod 131. Thus, deformation of the attachment rod 131 when the capillary component 150 is pushed onto the attachment rod 131 from the near side is prevented. Walls 137a and 137b for suppressing tilting of the capillary component 150 are provided at both sides at the far side of the attachment rod 131. Referring to Fig. 5, the capillary component 150 is pushed onto the attachment rod 131 from the near side and attached thereto.

Now, a process of using the blood analysis device 1 according to the present exemplary embodiment to perform a blood analysis is described.

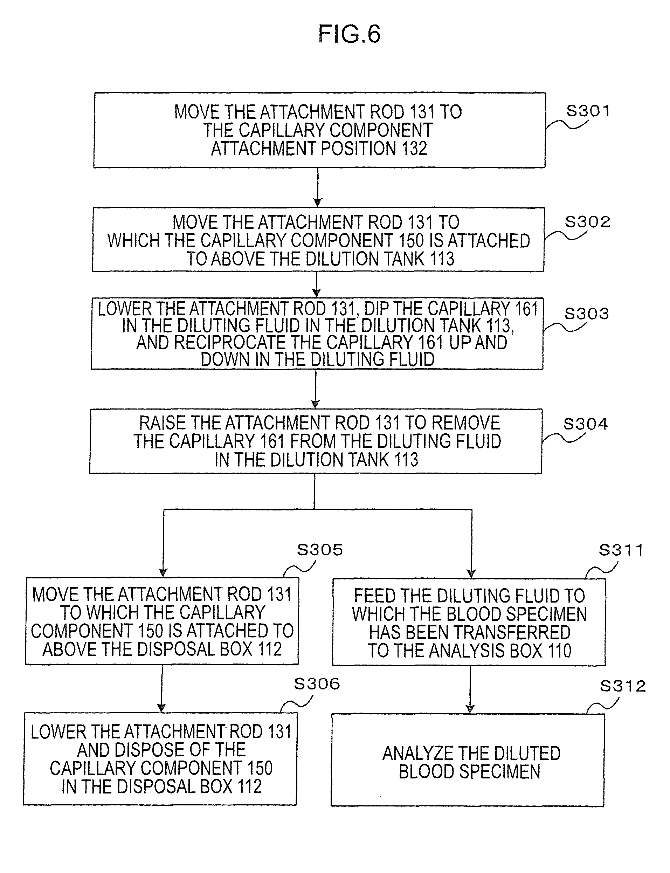

Firstly, referring to Fig. 6, a case of using the capillary component 150 (see Fig. 3) to perform an analysis of a minute-amount blood specimen from an infant or the like is described.

First, a small quantity of blood is extracted from a fingertip, an earlobe or the like. The opening 161 a of the capillary 161 of the capillary component 150 (see Fig. 3) is dipped in this blood specimen, and the blood specimen is sucked into the capillary 161 by the capillary effect.

The controller 102c controls the capillary component conveyance line 130 (step S301) to move the attachment rod 131 to the capillary component attachment position 132 (see Fig. 1 and Fig. 4).

Then the capillary component 150 at which the blood is accommodated in the capillary 161 is attached to the attachment rod 131 disposed at the capillary component attachment position 132. For this attachment, the protrusion portion 153b of the capillary component 150 is pushed to the state in which the holding member 153 and the attachment base 152 are opened up, and the capillary attachment part 151 is inserted such that the attachment rod 131 is sandwiched between the attachment base 152 and the holding member 153 (see Fig. 3 to Fig. 5).

Next, the controller 102c controls the capillary component conveyance line 130 (step S302) to move the attachment rod 131 to which the capillary component 150 has been attached to above the dilution tank 113.

The controller 102c then controls the capillary component conveyance line 130 to lower the attachment rod 131, dip the capillary 161 in the diluting fluid in the dilution tank 113, and reciprocate the capillary 161 up and down in the diluting fluid. The blood specimen in the capillary 161 is directly transferred into the diluting fluid in the dilution tank 113 by the capillary 161 being dipped in the diluting fluid (step S303). Although the blood specimen may be transferred into the diluting fluid in the dilution tank 113 just by the capillary 161 being dipped in the diluting fluid, the blood specimen may be transferred more quickly by the capillary 161 being moved up and down in the diluting fluid.

The controller 102c then controls the capillary component conveyance line 130 to raise the attachment rod 131 and remove the capillary 161 from the diluting fluid in the dilution tank 113 (step S304).

Next, the controller 102c controls the pump 116 to feed the diluting fluid into which the blood specimen has been transferred to the analysis box 110 (step S311).

The controller 102c then controls the analysis box 110 to perform an analysis of the diluted blood specimen (step S312).

Meanwhile, the controller 102c controls the capillary component conveyance line 130 to move the attachment rod 131 to which the capillary component 150 is attached to above the disposal box 112 (step S305).

The controller 102c then controls the capillary component conveyance line 130 to lower the attachment rod 131 and dispose of the capillary component 150 in the disposal box 112 (step S306).

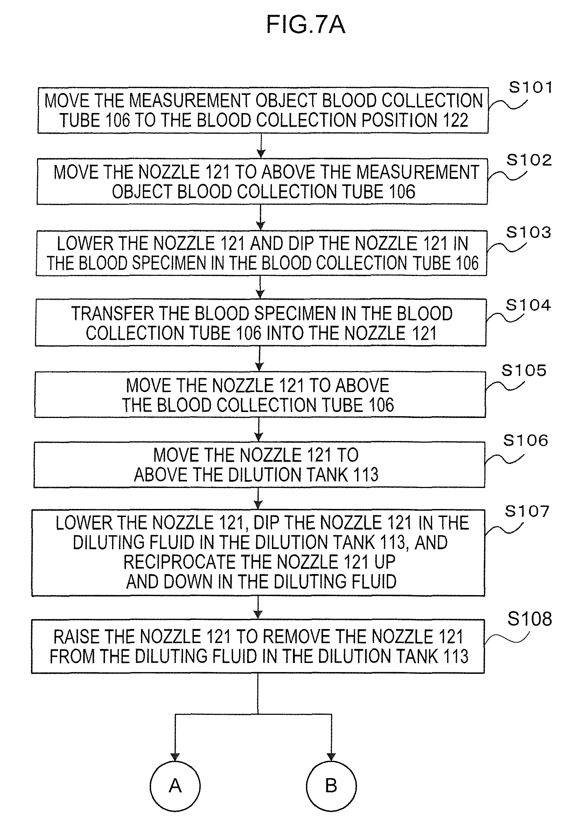

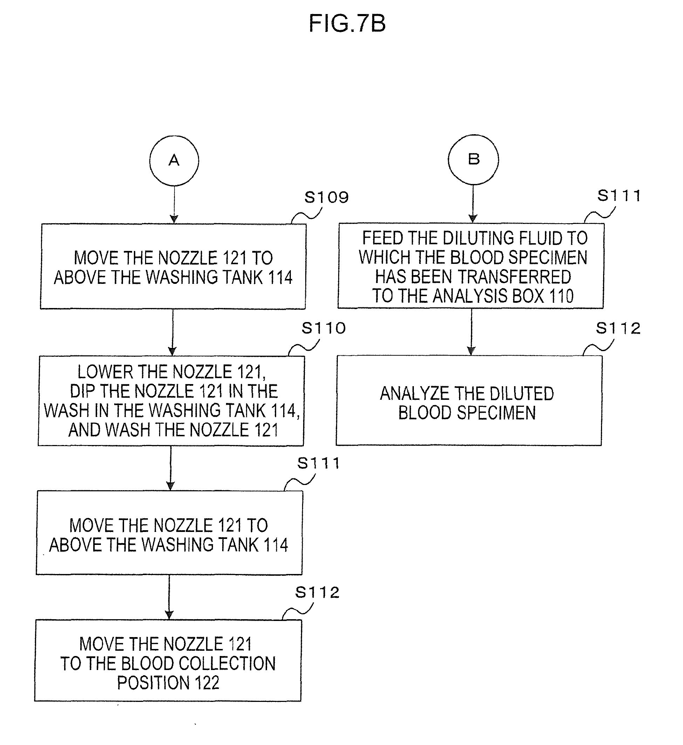

Now, referring to Fig. 7A and Fig. 7B, a case of using one of the blood collection tubes 106 to perform an analysis of a blood specimen from an adult or the like, which has a larger quantity than a blood specimen from an infant or the like, is described.

First, the blood collection tube rack 107 retaining a plural number of the blood collection tubes 106, in which blood specimens from adults and the like have been collected, is loaded onto the movable platform 105 of the blood collection tube rack loading portion 104 (see Fig. 1).

The controller 102c controls the movable platform 105 to move the blood collection tube 106 that is to be the object of measurement to the blood collection position 122 (step S101).

The controller 102c then controls the nozzle conveyance line 120 to move the nozzle 121 to above the measurement object blood collection tube 106 (step S102).

The controller 102c controls the nozzle conveyance line 120 to lower the nozzle 121 and dip the nozzle 121 in the blood specimen inside the blood collection tube 106 (step S103).

The controller 102c controls the pump 126a to transfer the blood specimen in the blood collection tube 106 into the nozzle 121 (step S104).

The controller 102c controls the nozzle conveyance line 120 to move the nozzle 121 to above the blood collection tubes 106 (step S105).

The controller 102c then controls the nozzle conveyance line 120 to move the nozzle 121 to above the dilution tank 113 (step S106).

The controller 102c controls the nozzle conveyance line 120 to lower the nozzle 121. The nozzle 121 is dipped in the diluting fluid in the dilution tank 113 and reciprocated up and down in the diluting fluid, and the blood specimen in the nozzle 121 is transferred into the diluting fluid in the dilution tank 113 (step S107).

The controller 102c then controls the nozzle conveyance line 120 to raise the nozzle 121 and remove the nozzle 121 from the diluting fluid in the dilution tank 113 (step S108).

The controller 102c controls the pump 116 to feed the diluting fluid into which the blood specimen has been transferred to the analysis box 110 (step S111).

The controller 102c controls the analysis box 110 to perform an analysis of the diluted blood specimen (step S112).

Meanwhile, the controller 102c controls the nozzle conveyance line 120 to move the nozzle 121 to above the washing tank 114 (step S109).

The controller 102c then controls the nozzle conveyance line 120 to lower the nozzle 121, dip the nozzle 121 in the wash in the washing tank 114, and wash the nozzle 121 (step S110).

The controller 102c controls the nozzle conveyance line 120 to move the nozzle 121 to above the washing tank 114 (step S111).

The controller 102c then controls the nozzle conveyance line 120 to move the nozzle 121 to the blood collection position 122 (step S112).

Thus, in the present exemplary embodiment, an analysis sample may be prepared simply, by attaching the capillary component 150 provided with the capillary 161 to the attachment rod 131 and directly transferring the blood specimen in the capillary 161 from the capillary 161 to the diluting fluid.

Because the blood specimen in the capillary 161 is transferred directly from the capillary 161 to the diluting fluid, there is no need to use a nozzle or the like for transferring the blood specimen in the capillary. Moreover, there is no loss of the specimen consequent to suction by a nozzle or the like. That is, if only a quantity required for measurement is collected from a person and the specimen is accommodated in a separate container, then when the specimen is sucked from this container, some of the specimen is left in the container after nozzle suction, this part of the specimen is ultimately lost, and the quantity cannot be assured. In contrast, according to the process of direct transfer in a capillary of the present invention, this situation does not occur and the quantity can be assured.

Moreover, because the attachment rod 131 to which the capillary component 150 is attached is used separately from the nozzle 121 that collects blood from the blood collection tubes 106, contamination of the nozzle 121 does not occur.

### - First Variant Example of the First Exemplary Embodiment -

In the present exemplary embodiment, the capillary component 150 including the capillary 161 is used as an example of the specimen sampling implement. However, a fluid-absorbent material such as filter paper or the like may be used for the specimen sampling portion. In that case, a paper attachment portion (not shown in the drawings) is used in place of the capillary attachment part 151, the filter paper is attached to the attachment rod 131, and the blood specimen is absorbed by the filter paper. Then, the filter paper that has absorbed the blood specimen is dipped in the diluting fluid in the dilution tank 113 by the capillary component conveyance line 130, is preferably reciprocated up and down in the diluting fluid, and the blood specimen absorbed in the filter paper is transferred to the diluting fluid in the dilution tank 113.

### - Second Exemplary Embodiment -

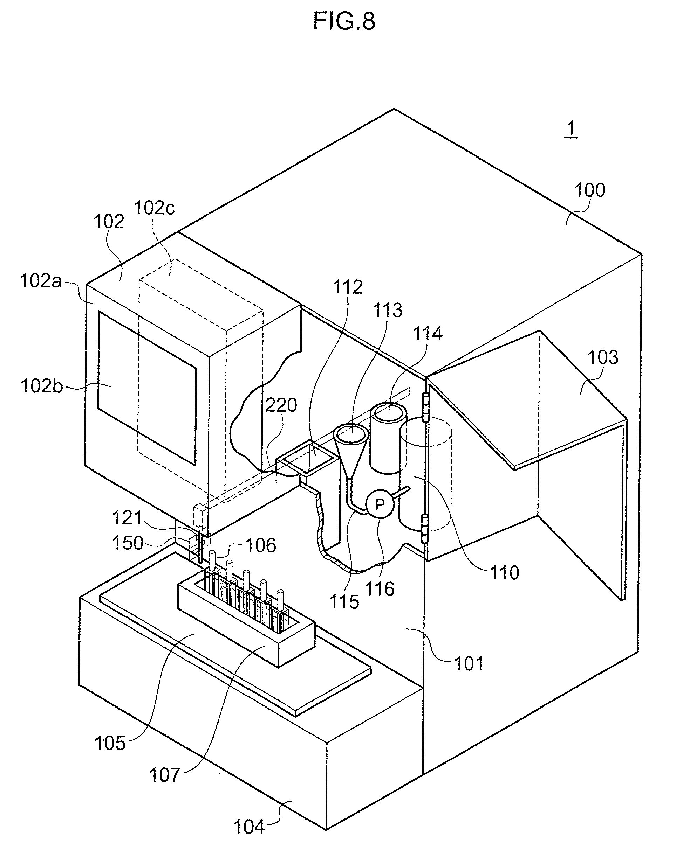

Referring to Fig. 8, the present exemplary embodiment differs from the first exemplary embodiment in that the attachment rod 131 is not used and the capillary component 150 is attached to the nozzle 121. In other respects the present exemplary embodiment is similar to the first exemplary embodiment. However, because the capillary component 150 is attached to the nozzle 121, in the present exemplary embodiment a single nozzle conveyance line 220 is used in common. Accordingly, the disposal box 112, the dilution tank 113 and the washing tank 114 are arranged in a straight line. Thus, because the capillary component 150 is attached to the nozzle 121, the blood analysis device 1 has a simpler structure.

### - Third Exemplary Embodiment -

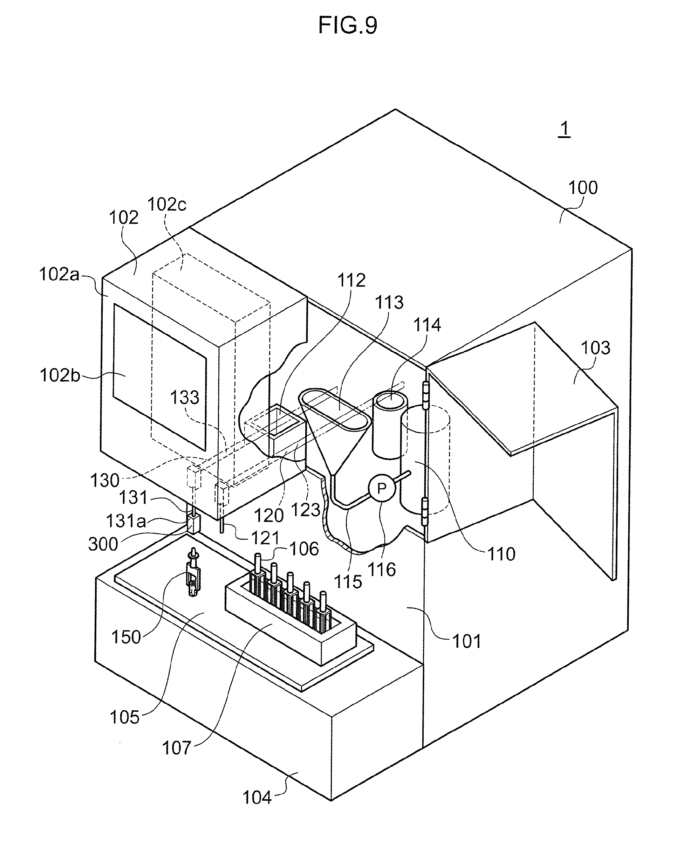

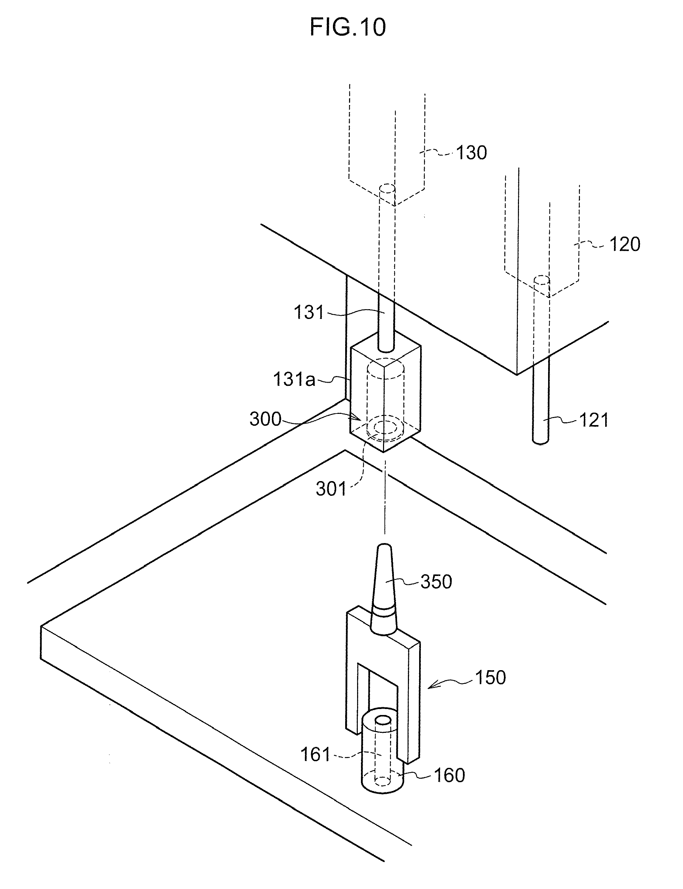

Referring to Fig. 9 and Fig. 10, the present exemplary embodiment differs from the first exemplary embodiment in that the attachment rod 131 includes a capillary component attachment portion 131a, and in including an attachment member 300 that attaches the capillary component 150 to the capillary component attachment portion 131 a. In other respects the present exemplary embodiment is similar to the first exemplary embodiment. The capillary component attachment portion 131a is an example of the specimen sampling implement attachment portion.

Referring to Fig. 10, the attachment member 300 includes an O-ring 301. The capillary component 150 is attached to the attachment rod 131 by an attachment object portion 350 of the capillary component 150 being tightly fitted into the O-ring 301.

### - First Variant Example of the Third Exemplary Embodiment -

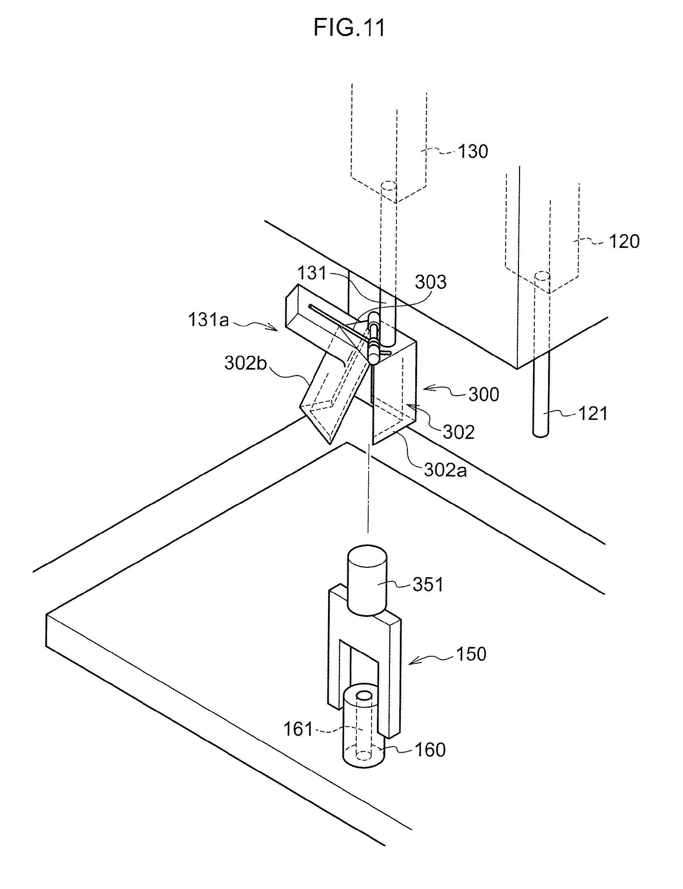

Referring to Fig. 11, the attachment member 300 includes a sandwiching member 302. A sandwiching portion 302a and a sandwiching portion 302b of the sandwiching member 302 are opened apart and an attachment object portion 351 of the capillary component 150 is sandwiched between the sandwiching portions 302a and 302b. Thereafter, the sandwiching portions 302a and 302b are closed up, the sandwiching portions 302a and 302b are urged inward by a spring member 303, and the capillary component 150 is attached to the attachment rod 131.

### - Second Variant Example of the Third Exemplary Embodiment -

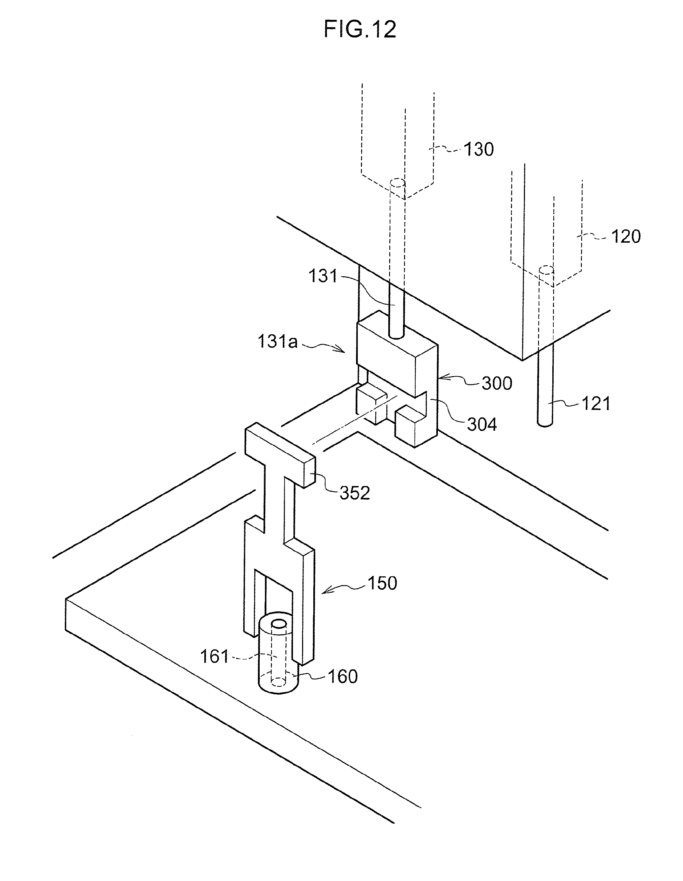

Referring to Fig. 12, the attachment member 300 includes a fitting portion 304. The capillary component 150 is attached to the attachment rod 131 by a fitting 352 of the capillary component 150 being tightly fitted into the fitting portion 304 of the attachment member 300.

### - Third Variant Example of the Third Exemplary Embodiment -

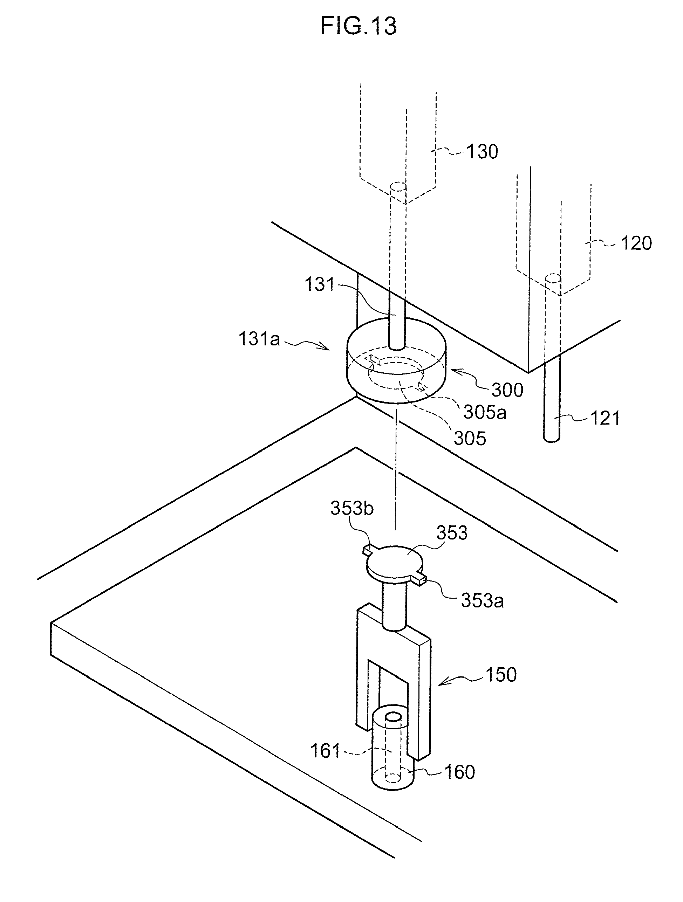

Referring to Fig. 13, the attachment member 300 includes an attachment portion 305. A protrusion portion 353a and protrusion portion 353b at an attachment portion 353 of the capillary component 150 are inserted into a recess portion 305a and a recess portion 305b, respectively, at the attachment portion 305 of the attachment member 300. Thereafter, the attachment member 300 or the capillary component 150 is turned. Thus, the capillary component 150 is attached to the attachment rod 131.

### - Fourth Variant Example of the Third Exemplary Embodiment -

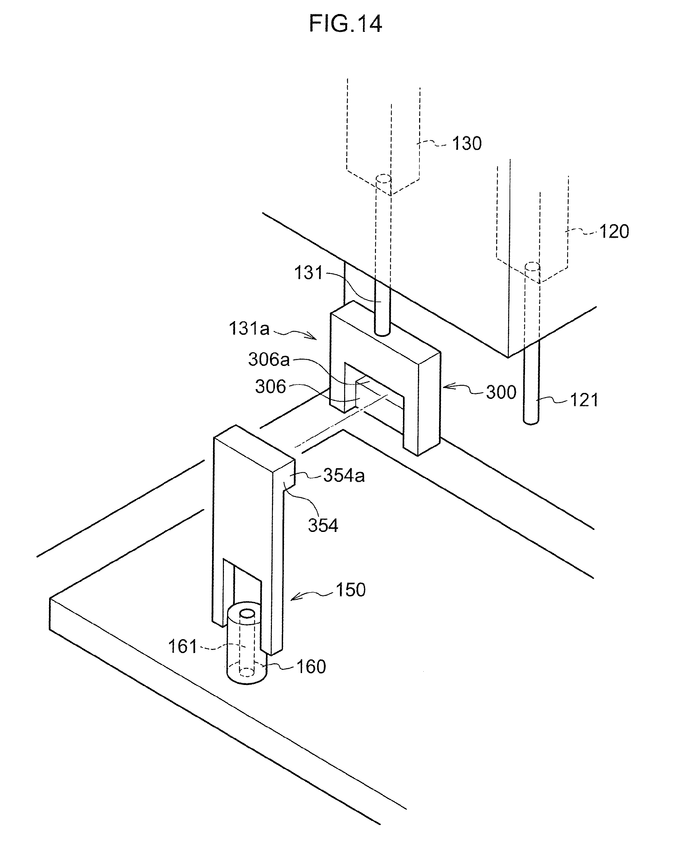

Referring to Fig. 14, the attachment member 300 includes an attachment portion 306. The capillary component 150 is attached to the attachment rod 131 by a protrusion portion 354a at an attachment portion 354 of the capillary component 150 being inserted into a hole 306a at the attachment portion 306 of the attachment member 300.

### - Fifth Variant Example of the Third Exemplary Embodiment -

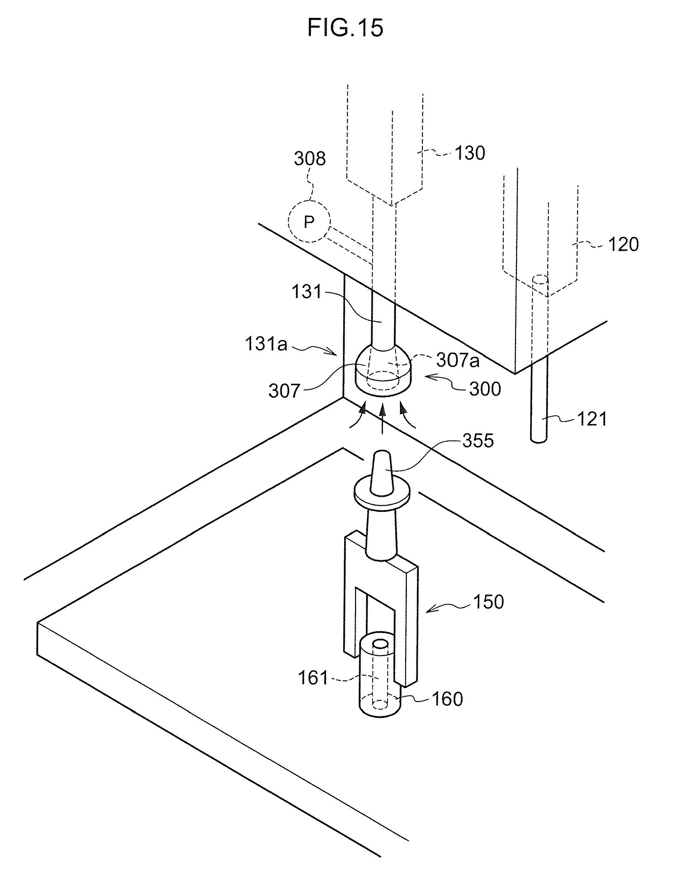

Referring to Fig. 15, the attachment member 300 includes an attachment portion 307 fabricated of rubber. An attachment portion 355 of the capillary component 150 is inserted into a hole 307a in the attachment portion 307 of the attachment member 300, and is sucked in by a vacuum pump 308 that is connected to the attachment rod 131. Thus, the capillary component 150 is attached to the attachment rod 131. Note that the interior of the attachment rod 131 is hollow.

### - Fourth Exemplary Embodiment -

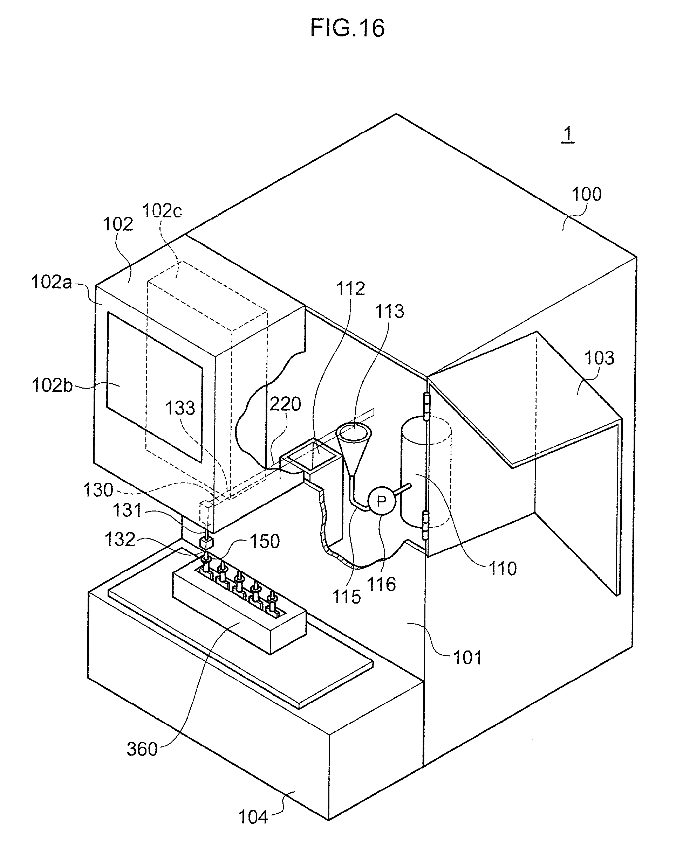

The third exemplary embodiment is equipped with the nozzle conveyance line 120 and the capillary component conveyance line 130. The nozzle 121 is used at the nozzle conveyance line 120, and the attachment rod 131 to which the capillary component 150 is attached is used at the capillary component conveyance line 130. Referring to Fig. 16, the present exemplary embodiment differs from the third exemplary embodiment in that the nozzle 121 and the nozzle conveyance line 120 are not used but only the capillary component conveyance line 130 is used. In other respects the present exemplary embodiment is similar to the third exemplary embodiment. As an example, in the present exemplary embodiment, as shown in the drawing, a plural number of the capillary component 150 may be accommodated in a capillary component rack 360. The capillary component rack 360 may be moved to successively move capillary components 150 that are to be objects of analysis to the capillary component attachment position 132, the capillary components 150 may be successively attached to the attachment rod 131, and respective blood specimens collected in the plural capillary components 150 may be successively analyzed. However, the present exemplary embodiment is not limited to this. As in the example according to the first exemplary embodiment, an individual capillary component 150 may be attached to the attachment rod 131.

### - Fifth Exemplary Embodiment -

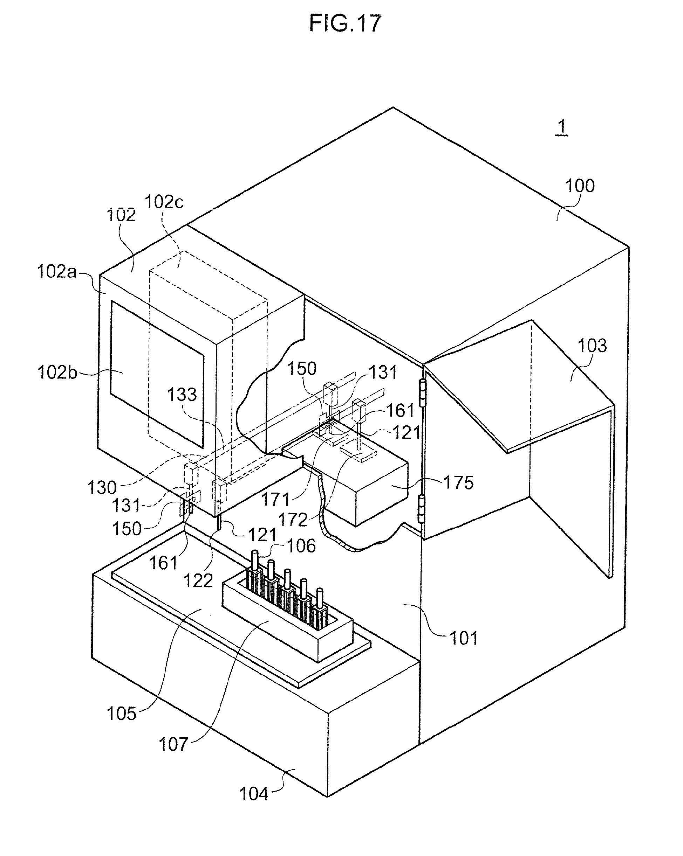

In the first to fourth exemplary embodiments described above, the capillary 161 of the capillary component 150 or a fluid-absorbent material such as filter paper or the like is dipped in the diluting fluid in the dilution tank 113, the blood specimen is transferred directly into the diluting fluid, and the diluted blood specimen is fed to the analysis box 110 and analyzed. Referring to Fig. 17, in the present exemplary embodiment a dot of the specimen in the capillary 161 is applied directly from the capillary 161 to a test plate 171, which serves as the analysis sample preparation member. In a state in which the specimen has permeated into the test plate 171, an optical measurement is conducted by an optical measuring instrument 175. A dot of a specimen sucked into the nozzle 121 is also applied directly from the nozzle 121 to a test plate 172 that serves as the analysis sample preparation member, and an optical measurement is conducted by the optical measuring instrument 175 in the state in which this specimen has permeated into the test plate 172.

### - Sixth Exemplary Embodiment -

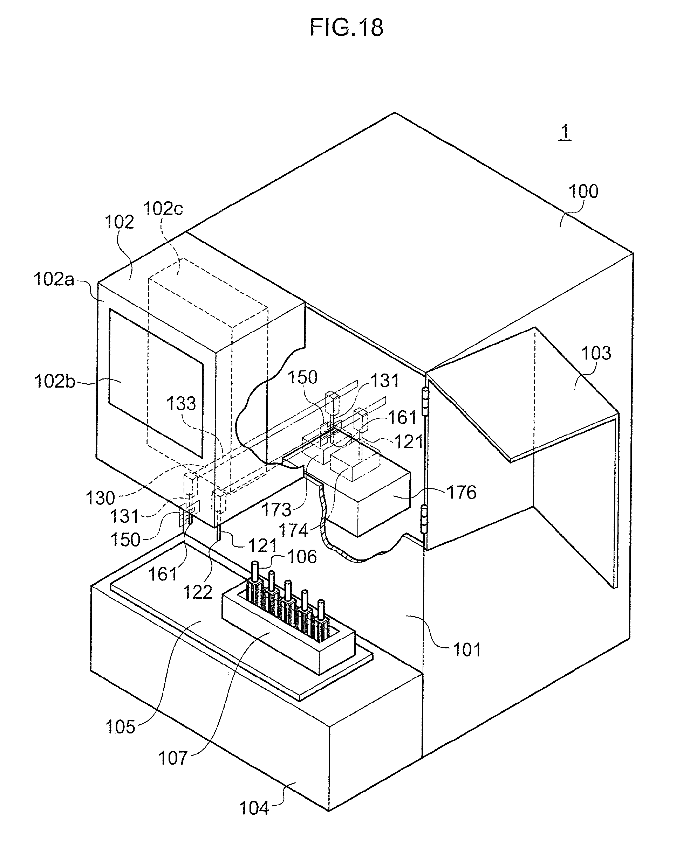

In the fifth exemplary embodiment described above, a dot of a specimen in the capillary 161 is directly applied to the test plate 171 and an optical measurement is conducted by the optical measuring instrument 175 in the state in which the specimen has permeated into the test plate 171. Referring to Fig. 18, in the present exemplary embodiment, a specimen in the capillary 161 is directly transferred from the capillary 161 to a reaction field 173 that serves as the analysis sample preparation member. Then, depending on the type of specimen, a measurement is conducted by a measurement instrument 176, which is a measurement field, such as colorimetry, an electrochemical measurement, an ionic activity measurement, a capillary electrophoresis measurement or the like. In other respects the present exemplary embodiment is similar to the fifth exemplary embodiment. A sample sucked into the nozzle 121 can also be directly transferred from the nozzle 121 to the reaction field 173 that serves as the analysis sample preparation member, and a measurement then conducted by the measurement instrument 176.

For example, when the measurement by the measurement instrument 176 is colorimetry, a test plate including a reagent film is used as the reaction field 173, and the specimen in the capillary 161 is transferred directly from the capillary 161 to the reaction field 173 by the distal end of the capillary 161 being brought into contact with the reagent film of the test plate. Thereafter, the test plate is disposed at an optical measurement portion of the measurement instrument 176, and a colorimetry analysis is conducted by the measurement instrument 176. When the measurement by the measurement instrument 176 is an electrochemical measurement, a tube structure in which electrodes and a reaction reagent are arranged is used as the reaction field 173. The specimen in the capillary 161 is transferred directly from the capillary 161 to the reaction field 173 by the distal end of the capillary 161 being aligned with an inlet of the tube structure. Then, a voltage is applied to the electrodes and an electrochemical measurement analysis is conducted by the measurement instrument 176. When the measurement by the measurement instrument 176 is an ionic activity measurement, and when the measurement by the measurement instrument 176 is a capillary electrophoresis management, analyses are conducted by the measurement instrument 176 in appropriate similar modes.

In the exemplary embodiment described above, the reaction field 173 and the measurement field are separate, but they may coincide.

In the present Description, the specimen sampling implement-the capillary component 150 or the like-is preferably an implement that samples a minute-amount specimen into the specimen sampling implement and is capable of retaining the minute-amount specimen. The term "minute amount" as used in "minute-amount specimen" is intended to include an amount that can be sampled and retained in the specimen sampling implement, and may be any amount provided the amount is at least a minimum required for implementing the analysis. As an example, the minute amount is 0.5 µL to 10 µL, as another example 1 µL to 8 µL, and as a further example 2 µL to 5 µL. In the present Description, the term "specimen" is intended to include a sample that is to be an object of analysis, and is, for example, a fluid from a test subject such as blood, urine, saliva or the like, or another liquid or such. However, specimens are not limited thus and may be, for example, a mixed liquid of a bodily fluid and another fluid (a diluting fluid or the like), and as another example, a suspension in which a solid material collected from the natural environment is suspended in a liquid, or the like.

While a number of representative embodiments of the present invention have been described hereabove, the present invention is not to be limited by these embodiments. The above embodiments may be applied to cases other than analyzing bodily fluids from humans, and may be applied to, for example, cases of analyses such as radiation analyses using samples collected from soil and so forth.

## Claims

1. An analysis device comprising:
an analysis sample preparation section that utilizes a specimen and an analysis sample preparation member to prepare an analysis sample of the specimen;
a specimen sampling implement conveyance member at which a specimen sampling implement that retains the specimen is attached from externally thereto, the specimen sampling implement conveyance member conveying the specimen sampling implement;
an analysis section that analyzes the analysis sample; and
a control section that controls the specimen sampling implement conveyance member so as to:
convey the specimen sampling implement to the analysis sample preparation section and
directly transfer the specimen from the specimen sampling implement to the analysis sample preparation member at the analysis sample preparation section.

2. The analysis device according to claim 1, wherein the specimen sampling implement includes a specimen sampling portion that utilizes the capillary effect to sample the specimen.

3. The analysis device according to claim 2, wherein the analysis sample preparation member includes a diluting fluid, and the control section controls the specimen sampling implement conveyance member so as to directly transfer the specimen from the specimen sampling implement to the analysis sample preparation member by dipping the specimen sampling implement in the diluting fluid.

4. The analysis device according to claim 3, wherein the control section controls the specimen sampling implement conveyance member so as to directly transfer the specimen from the specimen sampling implement to the analysis sample preparation member by additionally moving the specimen sampling implement in the diluting fluid.

5. The analysis device according to any one of claims 1 to 4, wherein the specimen sampling implement includes a capillary.

6. The analysis device according to any one of claims 1 to 4, wherein the specimen sampling implement includes a fluid-absorbent material.

7. The analysis device according to any one of claims 1 to 6, wherein:
the specimen sampling implement conveyance member includes a specimen sampling implement attachment portion to which the specimen sampling implement is attached, and
the specimen sampling implement includes an attachment member that attaches the specimen sampling implement to the specimen sampling implement attachment portion.

8. The analysis device according to any one of claims 1 to 6, wherein:
the specimen sampling implement conveyance member includes a specimen sampling implement attachment portion to which the specimen sampling implement is attached, and
the specimen sampling implement attachment portion includes an attachment member that attaches the specimen sampling implement to the specimen sampling implement attachment portion.

9. The analysis device according to claim 7 or claim 8, further comprising a nozzle that samples a second specimen, the second specimen being larger in quantity than the specimen, wherein the specimen sampling implement attachment portion differs from the nozzle.

10. The analysis device according to claim 7 or claim 8, further comprising a nozzle that samples a second specimen, the second specimen being larger in quantity than the specimen, wherein the specimen sampling implement attachment portion includes the nozzle.

11. The analysis device according to any one of claims 1 to 10, further comprising a disposal section at which the specimen sampling implement is disposed of,
wherein the control section, after causing the specimen sampling implement to directly transfer the specimen from the specimen sampling implement to the analysis sample preparation member at the analysis sample preparation section, controls the specimen sampling implement conveyance member so as to dispose of the specimen sampling implement at the disposal section.

12. A specimen sampling implement comprising:
a specimen sampling portion that utilizes the capillary effect to sample a specimen mounted at the analysis device according to any one of claims 1 to 11; and
an attachment member that attaches the specimen sampling implement to the specimen sampling implement conveyance member that conveys the specimen sampling implement.

13. An analysis process comprising:
attaching a specimen sampling implement that retains a specimen to a specimen sampling implement conveyance member from externally thereto, the specimen sampling implement conveyance member conveying the specimen sampling implement;
with the specimen sampling implement conveyance member, conveying the specimen to an analysis sample preparation section that utilizes the specimen and an analysis sample preparation member to prepare an analysis sample of the specimen;
directly transferring the specimen from the specimen sampling implement to the analysis sample preparation member at the analysis sample preparation section; and
analyzing the analysis sample.

14. An analysis program causing a computer to execute a process comprising:
in a state in which a specimen sampling implement that retains a specimen has been attached from externally to a specimen sampling implement conveyance member that conveys the specimen sampling implement, conveying the specimen sampling implement to an analysis sample preparation section that utilizes the specimen and an analysis sample preparation member to prepare an analysis sample of the specimen;
causing the specimen sampling implement conveyance member to directly transfer the specimen from the specimen sampling implement to the analysis sample preparation member at the analysis sample preparation section; and
analyzing the analysis sample.
